Europäisches Patentamt

European Patent Office

Office européen des brevets

(11) Veröffentlichungsnummer: **0 304 710 B1**

(12) **EUROPÄISCHE PATENTSCHRIFT**

(45) Veröffentlichungstag der Patentschrift: **25.03.92**

(21) Anmeldenummer: **88112825.0**

(22) Anmeldetag: **06.08.88**

(51) Int. Cl.⁵: **F16C 9/02**

(54) **Kurbeltrieb einer Brennkraftmaschine der V-Bauart.**

(30) Priorität: **22.08.87 DE 3728014**

(43) Veröffentlichungstag der Anmeldung:
**01.03.89 Patentblatt 89/09**

(45) Bekanntmachung des Hinweises auf die
Patenterteilung:
**25.03.92 Patentblatt 92/13**

(84) Benannte Vertragsstaaten:
**DE ES FR GB IT SE**

(56) Entgegenhaltungen:
**DE-A- 2 341 082**
**DE-A- 3 541 903**
**DE-U- 7 917 023**
**GB-A- 155 653**
**US-A- 2 780 502**

(73) Patentinhaber: **Daimler-Benz Aktiengesellschaft**
**Postfach 600202 Mercedesstrasse 136**
**W-7000 Stuttgart 60(DE)**

(72) Erfinder: **Werner, Johannes**
**Schwalbenweg 28**
**W-7050 Waiblingen(DE)**
Erfinder: **Kerschbaum, Walter**
**Lange Furche 37**
**W-7012 Fellbach(DE)**
Erfinder: **Heinrich, Rolf**
**Schumannstrasse 8**
**W-7056 Weinstadt 1(DE)**
Erfinder: **Körner, Wolf-Dietrich Prof.**
**Lindenstrasse 36**
**W-7148 Remseck 3(DE)**

**Beschreibung**

Die Erfindung betrifft einen Kurbeltrieb einer Brennkraftmaschine der V-Bauart gemäß Oberbegriff des Hauptanspruches.

Aus der DE-A-23 41 082 ist u.a. eine Kurbelwelle bekannt, deren versetzte Hubzapfen über ein Zwischenelement miteinander verbunden sind. Über die Axialführung zweier auf diesen Hubzapfen gelagerter Pleuel sagt die DE-A jedoch nichts aus.

Bei einem in der DE-A-35 41 903 offenbarten Kurbeltrieb sind zur Erlangung eines vorgegebenen Zündabstandes die Hubzapfen innerhalb einer Kröpfung versetzt angeordnet und über eine nichttragende Zwischenwange miteinander verbunden. In dieser Anordnung wird die Zwischenwange auch als Axialführung beider Pleuelstangen verwendet, wobei - im Gegensatz zu bei V-Motoren sonst üblichen Kröpfungen mit durchgehenden Pleuelzapfen - die Pleuelstangen auch auf den einander zugewandten Innenseiten einer mit erhöhten Reibungsverlusten behafteten, vollrotatorischen Axialanlaufbewegung gegenüber der Zwischenwange unterliegen. Aus der US-A-27 80 502 ist es ferner bekannt, zwei auf einem gemeinsamen Hubzapfen gelagerte Pleuel über entsprechend ausgebildete Lagerschalen gegeneinander axial zu führen.

Der Erfindung liegt nun die Aufgabe zugrunde, einen Kurbeltrieb der im Oberbegriff des Hauptanspruchs beschriebenen Art zu schaffen, bei dem die durch den Axialanlauf der Pleuelstangen verursachten Reibungsverluste weitestgehend reduziert sind bei gleichzeitiger einwandfreier Führung beider Pleuelstangen.

Die Aufgabe wird erfindungsgemäß durch die Merkmale des kennzeichnenden Teils des Hauptanspruches gelöst.

Durch die erfindungsgemäße Ausgestaltung des Kurbeltriebs führen sich - trotz des Hubzapfenversatzes - die beiden Pleuel gegenseitig und zwar über die beiden an den großen Pleuelaugen angebrachten Axialanlaufflächen, deren Außenkontur so geformt ist, daß in jeder Kurbelstellung eine zusammenhängende Überdeckungsfläche der Anläufe gesichert ist. Dadurch, daß jedes der beiden Pleuelaugen axial breiter ist als der zugehörige Hubzapfen, liegt die Führungsebene in Höhe des Zwischenelementes, so daß auch ein Auflaufen eines überstehenden Pleuelauges auf den benachbarten Hubzapfen ausgeschlossen ist.

Ferner unterliegt bei einem so ausgestalteten Kurbeltrieb die Reibpaarung der Anlaufflächen lediglich der Relativbewegung der Pleuelstangen zueinander, welche sich - aufgrund der V-förmigen Zylinderanordnung - aus einer hin- und hergehenden Winkelbewegung und wegen des Hubzapfenversatzes aus einer örtlich translatorischen Verschiebung zusammensetzt. Hierbei ergeben sich geringere hydrodynamische Verluste als bei einer vollrotatorischen Anlaufbewegung der Pleuelstangen mit zweifacher Reibpaarung, wie es bei Verwendung einer Zwischenwange gegeben ist.

Aufgrund des die beiden Hubzapfen miteinander verbindenden Zwischenelementes, dessen Querschnittsfläche der Schnittfläche aus den beiden Hubzapfenprojektionsflächen entspricht, entfallen auch hier die unerwünschten Radienverschneidungen, so daß die Kurbelwelle einfach zu fertigen ist und übermäßig erhöhte Kerbspannungen vermieden werden können.

Die Ausgestaltung des Kurbeltriebs nach Anspruch 2 ermöglicht eine weitere Reibungseinsparung, indem nun auch bei versetzten Hubzapfen die Lagerdeckel schmäler ausgeführt werden als die Pleuelstangen im Bereich der großen Pleuelaugen, somit an der Axialführung nicht teilnehmen und an den Seiten auch nicht feinbearbeitet werden müssen. Mit Verminderung der Reibflächen sinkt hierbei auch die hydrodynamische Verlustleistung, welche sich nur noch aus der stangenseitigen Überdeckung ergibt.

Eine trotz größer gewähltem Hubzapfenversatz noch zusammenhängende Überdeckung der beiden Axialanlaufflächen in jeder Kurbelstellung ist mit der Ausbildung des Kurbeltriebs nach Anspruch 3 gegeben. Da die Lagerdeckel an der Axialführung nicht teilhaben, kann der durch Verbreiterung der stangenseitig angeordneten Anlaufflächen verursachte rotierende Massenzuwachs problemlos durch entsprechende Reduzierung der Lagerdeckelbreite kompensiert werden, ohne daß die bewegten Massen des Kurbeltriebs unnötig ansteigen.

In der Zeichnung ist ein Ausführungsbeispiel eines erfindungsgemäßen Kurbeltriebes dargestellt.

Im einzelnen zeigt

Figur 1     einen erfindungsgemäßen Kurbeltrieb in einer ausschnittsweisen Darstellung,

Figur 2     eine Seitensicht der Figur 1.

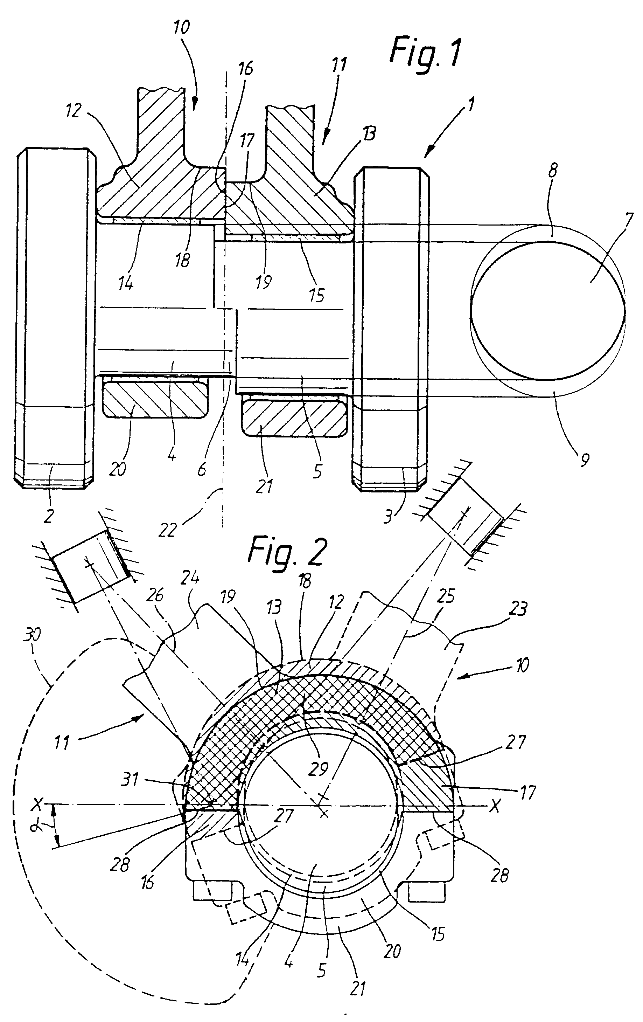

Figur 1 zeigt eine Kröpfung einer in einem V-Motor eingesetzten Kurbelwelle zwischen deren beider Kurbelwangen 2 und 3 zwei zueinander um ca. 10° versetzte Hubzapfen 4 und 5 angeordnet sind. Zwischen den beiden Hubzapfen 4 und 5 ist ein schmales Zwischenstück 6 vorgesehen, dessen Querschnittsfläche 7 die Form der Schnittfläche aus den beiden Hubzapfenprojektionsflächen 8 und 9 besitzt.

Die beiden Pleuel 10 und 11 sind mit ihren großen Pleuelaugen 12 und 13 über je eine Gleitlagerschale 14 bzw. 15 auf den Hubzapfen 4 und 5 drehbar gelagert und werden auf der einen Seite durch je eine Kurbelwange 2 bzw. 3 axial geführt. Die axiale Führung der Pleuel 10 und 11 auf der anderen Seite erfolgt jeweils durch das benachbarte Pleuel 11 bzw. 10 und zwar jeweils über eine am großen Pleuelauge 13 bzw. 12 angeordnete Axialanlauffläche 17 bzw. 16, die in ihrer Höhe bis hin zur Projektionskontur 19 bzw. 18 des großen Pleuelauges 13 bzw. 12 reicht (siehe auch Figur 2).

Die Axialführung beider Pleuel 10 und 11 erfolgt dabei nur über den pleuelschaftseitigen Teil der Pleuelaugen 12 und 13.

Die beiden Lagerdeckel 20 und 21 hingegen sind schmaler ausgebildet, so daß auch infolge der hochgezogenen Axialanlaufflächen 16 und 17 keinerlei zusätzliche Masse der Pleuel 12 und 13 in Kauf genommen werden muß. Die Breite eines jeden Pleuels 10 bzw. 11 im Führungsbereich ist größer als die Breite des jeweiligen es tragenden Hubzapfens 4 bzw. 5, so daß die Führungsebene 22 in Höhe des Zwischenstückes 6 verläuft.

Figur 2 zeigt den Kurbeltrieb aus Figur 1 in einer Seitenansicht. Dabei ist in Figur 2 der Übersichtlichkeit wegen das Pleuel 11, die Lagerschale 15 und der Hubzapfen 5 durch eine dünn ausgezogene Linienführung und das Pleuel 10, die Lagerschale 14 und der Hubzapfen 4 durch eine dünn gestrichelte Linienführung dargestellt.

Mit 23 und 24 sind ansatzweise noch die Pleuelschäfte und damit die Richtungen der Längsachsen 25 und 26 der beiden Pleuel 10 and 11 angedeutet.

Die eine schraffierte Fläche kennzeichnet die Axialanlauffläche 16 des Pleuels 10 und die entgegensetzt schraffierte Fläche die Axialanlauffläche 17 des Pleuels 11.

Da die Lagerdeckel 20 und 21 an der Axialführung der beiden Pleuel 10 und 11 nicht teilhaben, sind beide Axialanlaufflächen 16 und 17 lagerdeckelseitig jeweils durch die Trennebene 27 bzw. 28 zwischen dem schaftseitigen Pleuelaugenteil und dem Lagerdeckel 20 bzw. 21 begrenzt. Die gegenseitige Führung der beiden Pleuel 10 und 11 erfolgt nun über den gekreuzt schraffierten Überdeckungsbereich 29, in welchem die beiden Pleuelaugen 12 und 13 gegeneinander anlaufen. Dadurch, daß sich jede der Axialanlaufflächen 16 bzw. 17 bis in Höhe der jeweiligen Pleuelaugenprojektionskontur 18 bzw. 19 erstreckt, ist eine zusammenhängende großflächige Axialanlaufüberdeckung 29 nicht nur für die in der Zeichnung gewählte Kurbelstellung sondern für jeden Kurbelwinkel gewährleistet.

Zum Massenausgleich an beiden Kurbelwangen 2 bzw. 3 angeordnete Gegengewichte 30 sind um die Grundzapfenlängsachse 31 mit gleichem Verdrehwinkel α zur Hauptkröpfungsrichtung X - X gedreht angeordnet (Fertigungserleichterung).

## Patentansprüche

1. Kurbeltrieb einer Brennkraftmaschine der V-Bauart mit einer Kurbelwelle, die zwischen jeweils zwei Kurbelwangen (2, 3) zwei zueinander versetzt angeordnete Hubzapfen (4, 5) aufweist, die durch ein schmales Zwischenelement (6) miteinander verbunden sind und auf denen je ein Pleuel (10, 11) mit seinem großen Pleuelauge (12, 13) lagerbar ist, wobei jedes Pleuel auf einer ersten Seite durch eine Kurbelwange (2, 3) führbar ist und das Zwischenelement (6) eine Querschnittsfläche (7) aufweist, die weitgehend der Schnittfläche aus den beiden Hubzapfenprojektionsflächen (8, 9) entspricht,
**dadurch gekennzeichnet,**
daß jedes Pleuel (10 bzw. 11) auf der zweiten Seite durch eine am Pleuelauge (13 bzw. 12) des benachbarten Pleuels (11 bzw. 10) angeordnete Axialanlauffläche (17 bzw. 16) geführt ist, wobei die axiale Breite eines jeden Pleuelauges (10 bzw. 11) im Führungsbereich größer ist als die axiale Breite des zugehörigen Hubzapfens (4 bzw. 5) und
daß die radiale Höhe der Axialanlaufflächen (16 und 17) so groß ist, daß in jeder Kurbelstellung eine zusammenhängende Überdeckung (29) der Axialanlaufflächen (16 und 17) zweier sich gegenseitig führender Pleuel (10 und 11) gegeben ist.

2. Kurbeltrieb nach Anspruch 1,
**dadurch gekennzeichnet,**
daß die Axialanlaufflächen (16 und 17) radial bis hin auf die Projektionskontur (18 bzw. 19) des jeweiligen Pleuelauges (12 bzw. 13) vergrößert sind.

3. Kurbeltrieb nach Anspruch 2,
**dadurch gekennzeichnet,**
daß die gegenseitige Führung der beiden Pleuel (10 und 11) nur über den pleuelschaftseitigen Teil der Pleuelaugen (12 und 13) erfolgt und daß die Lagerdeckel (20 und 21) in der Breite zusammen um den aus dem Gewicht zu errechnenden Betrag reduziert sind, um welchen gewichtsmäßig die Pleuel (10 und 11) aufgrund der radialen Vergrößerung der Axialanlaufflächen (16 und 17) zugenommen haben.

## Claims

1. A crank drive of an internal combustion engine of V-construction with a crankshaft which, between two crank webs (2, 3) respectively, has two crank pins (4, 5) mounted offset respective to each other, which are joined together by means of a narrow intermediate element (6) and on which a connecting rod (10, 11) can be respectively supported with its large connecting rod eye (12, 13), each connecting rod being able to be passed on one first side through a crank web (2, 3), and the intermediate element (6) has a cross-sectional surface (7) which corresponds largely to the intersection area of the two crank pin projection areas (8, 9), characterized in that each connecting rod (10 or 11) is guided on the second side by an axial stop face (17 or 16) mounted on the connecting rod eye (13 or 12) of the adjacent connecting rod (11 or 10), the axial width of each connecting rod eye (10 or 11) in the guiding area being greater than the axial width of the associated crank pin (4 or 8), and in that the radial height of the axial stop faces (16 and 17) is so great that in each crank position a connected overlapping (29) of the axial stop faces (16 and 17) of two mutually guiding connecting rods (10 and 11) is afforded.

2. A crank drive according to claim 1, characterized in that the axial stop faces (16 and 17) are enlarged radially as far as the projection outline (18 or 19) of the respective connecting rod eye (12 or 13).

3. A crank drive according to claim 2, characterized in that the mutual guiding of the two connecting rods (10 and 11) is effected only over the part of the connecting rod eyes (12 and 13) of the connecting rod shank, and in that the bearing covers (20 and 21) are jointly reduced in width by the amount calculated from the weight, by which, in weight terms, the connecting rods (10 and 11) have increased further to the radial increase of the axial stop faces (16 and 17).

**Revendications**

1. Mécanisme à vilebrequin d'un moteur à combustion interne du type à structure en V, comprenant un vilebrequin qui est pourvu, respectivement entre deux bras de manivelle (2, 3), de deux manetons (4, 5)décalés l'un par rapport à l'autre, qui sont reliés entre-eux par un élément intermédiaire étroit (6) et sur chacun desquels une bielle (10, 11) peut être montée par son grand oeil (12, 13), chaque bielle étant guidée d'un premier côté par un bras de manivelle (2, 3) et l'élément intermédiaire (6) présentant une surface une surface de section (7) qui correspond dans une large mesure à la surface de recoupement des deux surfaces (8, 9) de projections de manetons, caractérisé en ce que chaque bielle (10 ou 11) est guidée sur le second côté par une surface de portée axiale (17 ou 16), située sur l'oeil (13 ou 12) de la bielle adjacente (11 ou 10), la largeur axiale de chaque oeil de bielle (10 ou 11) dans la zone de guidage étant plus grande que la largeur axiale du maneton associé (4 ou 5) et en ce que la hauteur radiale des surfaces de portée axiale (16 et 17) est suffisamment grande pour que, dans chaque position du vilebrequin, on obtienne un recouvrement (29) des surfaces de portée axiale (16 et 17) de deux bielles (10 ou 11) se guidant mutuellement.

2. Mécanisme à vilebrequin selon la revendication 1, caractérisé en ce que les surfaces de portée axiale (16 et 17) sont augmentées radialement jusqu'au contour de projection (18 ou 19) de l'oeil de bielle correspondant (12 ou 13).

3. Mécanisme à vilebrequin selon la revendication 2, caractérisé en ce que le guidage mutuel des deux bielles (10 et 11) est effectué seulement sur la partie, située du côté tige de bielle, des oeils de bielles (12 et 13) et en ce que les chapeaux de paliers (20 et 21) sont réduits au total en largeur de la valeur, à calculer à partir du poids, de laquelle les bielles (10 et 11) ont augmenté, en ce qui concerne le poids, sous l'effet de l'augmentation radiale des surfaces d'entrée axiale (16 et 17).

Fig. 1

Fig. 2